# EUROPÄISCHE PATENTSCHRIFT

(11) **EP 3 374 678 B1**
(45) Veröffentlichungstag und Bekanntmachung des Hinweises auf die Patenterteilung: **18.03.2020**
(21) Anmeldenummer: 16788146.5
(22) Anmeldetag: 31.10.2016
(51) Int. Cl.: F16K 31/06, F02M 59/36, H01F 7/08, F02M 63/00, F04B 7/00

(54) **ELEKTROMAGNETISCHER AKTOR FÜR EINE VENTILEINRICHTUNG**
ELECTROMAGNETIC ACTUATOR FOR A VALVE MECHANISM
ACTIONNEUR ÉLECTROMAGNÉTIQUE POUR MÉCANISME DE SOUPAPE

(30) Priorität: 11.11.2015 DE 102015119462
(43) Veröffentlichungstag der Anmeldung: 19.09.2018
(73) Patentinhaber: Kendrion (Villingen) GmbH, 78048 Villingen-Schwenningen (DE)
(72) Erfinder: SCHULZ, Florian, 78086 Brigachtal (DE); HEINGL, Ralf, 78054 Villingen-Schwenningen (DE); SUZUKI, Tsuneo, 78087 Mönchweiler (DE); FLÜHS, Joachim, 78050 Villingen-Schwenningen (DE); BRANDENBURG, Holger, 78048 Villingen-Schwenningen (DE)
(74) Vertreter: Westphal, Mussgnug & Partner Patentanwälte mbB
(86) Internationale Anmeldenummer: PCT/EP2016/076222
(87) Internationale Veröffentlichungsnummer: WO 2017/080861

(56) Entgegenhaltungen:
- EP-A1- 1 701 031
- DE-A1-102007 028 960
- DE-A1-102010 062 525
- JP-A- 2007 138 981

## Beschreibung

Die Erfindung betrifft einen elektromagnetischen Aktor für eine Ventileinrichtung, insbesondere in einem Common-Rail-System eines Kraftfahrzeuges, gemäß den Merkmalen des Oberbegriffs des Anspruchs 1.

Solche elektromagnetischen Aktoren sind z. B. aus der DE 10 2012 107 764 A1 bekannt. Dort ist ein elektromagnetisches Volumenstromregelventil offenbart, das zwischen eine Niederdruckpumpe und eine Hochdruckpumpe eines Common-Rail-Systems einer Kraftstoffeinspritzanlage angeordnet ist. Dort wird der Kraftstoff von einem Kraftstofftank über eine Förderleitung von der Niederdruckpumpe an die Hochdruckpumpe befördert. Dabei wird der von der Hochdruckpumpe zum Hochdruckspeicher, also zum Common-Rail-System, geführte Kraftstoff hinsichtlich seiner Menge durch das erwähnte und in der Förderleitung angeordnete Volumenstromregelventil gesteuert. Das Volumenstromregelventil ist als sogenanntes "Normally Open" - Ventil ausgebildet, was den entscheidenden Vorteil hat, dass im Falle eines Defekts oder Ausfall des Ventils auf jeden Fall noch Kraftstoff in das Rail, also in den Hochdruckspeicher gefördert werden kann und es im Gegensatz zu den "Normally - Closed" - Ventilen zu keiner Fehlfunktion der Brennkraftmaschine kommen kann, wenn das Ventil defekt wird oder ausfällt.

Problematisch bei den für die diesen Anwendungsfall im Common-Rail-System bekannten Ventilen ist jedoch die Tatsache, dass diese regelmäßig als Regelventile ausgebildet sind. Solche Regelventile bedürfen einer komplizierten Gestaltung des Polkerns mit Steuerkonus und eine entsprechende Anpassung des zugehörenden Ankers. Darüber hinaus sind die bekannten Volumenstromregelventile sehr justageempfindlich und müssen deshalb hochgenau montiert werden. Ein erhöhter Montageaufwand ist die Folge. Auch der Bauraum dieser elektromagnetischen Aktoren ist verhältnismäßig groß.

EP 1 701 031 A1, DE 10 2007 028 860 A1, JP 2007 138 981 A und DE 10 2010 062 525 A1 stellen weiteren Stand der Technik dar. Hier setzt die vorliegende Erfindung an.

Der elektromagnetische Aktor nach der vorliegenden Erfindung beruht im Wesentlichen darauf, einen Polkern vorzusehen, welcher an seinem vorderen Ende einen nach innen ragenden und zur Mittenachse weisenden Flansch aufweist. Durch diese Maßnahme kann der gesamte magnetische Kreis des elektromagnetischen Aktors verhältnismäßig kompakt aufgebaut werden.

Zusätzlich ist eine Führungsbuchse des Aktors zwischen den Polkern und ein Gehäuseteil eingeklemmt. Dieses Gehäuseteil ist ein Federdeckel des Aktors. Insgesamt zeichne²t sich der gesamte Aufbau des elektromagnetischen Aktors dadurch aus, dass, im Gegensatz zu bisherigen Lösungen, keinerlei O-Ringe zur Abdichtung des Aktors notwendig sind.

Ein weiterer Vorteil des erfindungsgemäßen Aktors ist die Tatsache, dass die einzelnen Teile in einfacher Weise miteinander montiert werden können, sodass eine vormontierte Baueinheit bereitgestellt werden kann, die lediglich noch von einer Erregerspule samt Spulenträger und Steckerteil umspritzt werden muss. Eine aufwändige Nachbearbeitung der einzelnen Teile ist vorteilhafterweise nicht mehr notwendig.

Weiterbildungen der Erfindung sind in den Unteransprüchen angegeben.

Ein Ausführungsbeispiel eines elektromagnetischen Aktors nach der Erfindung wird in der einzigen Figur gezeigt.

Der in der einzigen Figur gezeigte elektromagnetische Aktor ist mit dem Bezugszeichen 10 versehen und dient im vorliegenden Ausführungsbeispiel dazu, innerhalb eines Common-Rail-Systems eines Kraftfahrzeuges ein Ventilelement 110 in einem Kanal 100 zu verstellen. Der Kanal 100 ist dabei Bestandteil eines Common-Rail-Systems eines Kraftfahrzeuges, welcher eine Leitung 102 für einen Zulauf, eine Leitung 104 für einen Ablauf und eine weitere Leitung 106 für einen weiteren Ablauf aufweist. Das Ventilelement 110 ist beispielsweise ein Stößel, welcher von einer in der Figur nicht dargestellte Federeinrichtung nach oben gedrückt wird und mit seinem oberen in der Figur dargestellten Ende gegen einen Ankerstößel 22 des elektromagnetischen Aktors 10 drückt.

In der Figur ist der elektromagnetische Aktor 10 in seinem bestromten Zustand dargestellt. Dies bedeutet, dass sich der Ankerstößel 22, der zentrisch zur Mittenachse X ausgerichtet ist, in seiner obersten Endstellung befindet. Das Ventilelement 110 befindet sich ebenfalls in seiner obersten Endstellung aufgrund der Federwirkung der nicht dargestellten Federeinrichtung. Dabei verschließt das Ventilelement 110 den Zulauf 102, sodass kein Kraftstoff vom Zulauf 102 zu den Abläufen 104, 106 gelangen kann.

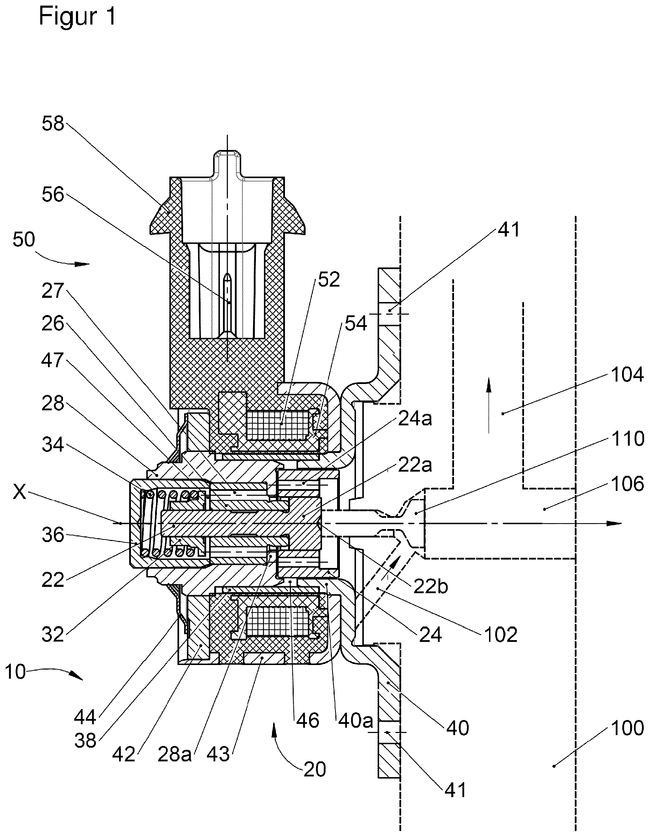

Der elektromagnetische Aktor 10 weist den bereits erwähnten Ankerstößel 22 auf. Der Ankerstößel 22 ist Bestandteil eines Betätigungssystems 20, welches über ein noch zu erläuterndes Erregersystem 50 derart betätigbar ist, dass sich der Ankerstößel 22 von seiner Ruhestellung in die in der Figur 1 gezeigte Aktivstellung bringen lässt.

Der Ankerstößel 22 ist in einer Führungsbuchse 26 axial geführt und verfügt an seinem vorderen, dem Kanal 100 zugewandten Ende über einen verbreiterten Bereich 22a. In diesem verbreiterten Bereich 22a des Ankerstößels 22 weist der Ankerstößel 22 beispielsweise einen doppelt so großen Durchmesser wie im übrigen Bereich auf. An seiner vorderen, dem Kanal 100 zugewandten Stirnfläche verfügt der Ankerstößel 22 über eine Einkerbung 22b, in der das Ventilelement 110 zentriert geführt werden kann.

Der schmälere Bereich des Ankerstößels 22 ist in der bereits erwähnten Führungsbuchse 26 axial geführt. Der verbreiterte Bereich 22a ist mit einem ringförmigen Anker 24 feststehend verbunden, indem der verbreiterte Bereich 22a des Ankerstößels 22 an die Innenwandung dieses Ankers 24 eingepresst ist. Die Führungsbuchse 26 wiederum ist in einen rohrförmigen Polkern 28 eingesetzt. Dabei ist die Führungsbuchse 26 in die Innenwandung dieses Polkerns 28 wiederum eingepresst.

Wie in der Figur dargestellt, ist der Polkern 28 als rohrförmiges Element ausgestaltet und verfügt entlang der Mittenachse X weitgehend über einen konstanten Durchmesser. In seinem dem Kanal 100 zugewandten vorderen Bereich springt allerdings zur Mittenachse X ein umlaufender Flansch 28a nach innen hervor. Der Innendurchmesser dieses umlaufenden Flansches 28a entspricht mindestens annähernd dem Innendurchmesser des gegenüberliegenden, ringförmigen Ankers 24. Durch den nach innen springenden und umlaufenden Flansch 28a des Polkerns 28 ist eine optimale Flussführung bei Bestromung des elektromagnetischen Aktors 10 erreicht.

An seiner dem verbreiterten Bereich 22a gegenüberliegenden Ende des Ankerstößels 22 ist dieser feststehend mit einem Federteller 32 in Verbindung. An diesem Federteller 32 stützt sich eine Federeinrichtung 34, im vorliegenden Fall eine Spiralfeder, mit ihrem unteren Ende ab. An ihrem oberen Ende stützt sich diese Federeinrichtung 34 an der Innenwandung eines Gehäuseteils, vorliegend eines U-förmigen Federdeckels 36, ab. Dieser Federdeckel 36 ist aus nicht magnetischem Material, vorzugsweise aus Edelstahl hergestellt.

In dem oberen Bereich des elektromagnetischen Aktors 10 ist ein plattenförmiger Gehäusedeckel 42 angeordnet, welcher ein topfförmiges Gehäuseteil 43 abschließt. Der Gehäusedeckel 42 ist dabei von einem Klemmring 44, der sich einerseits an der Außenwandung des Polkerns 28 und andererseits an der oberen, äußeren Wandung des Gehäusedeckels 42 abstützt, klemmend gehalten.

Zwischen dem topfförmigen Gehäuse 43 und dem Polkern 28 befindet sich koaxial zur Mittenachse X eine Erregerspule 52, die auf einem Spulenträger 54 sitzt. Der Spulenträger 54 und die Erregerspule 52 sind koaxial zur Mittenachse X des elektromagnetischen Aktors 10 angeordnet. Die Erregerspule 52 ist mit Kontaktstiften 56 elektrisch in Verbindung. Über diese Kontaktstifte 56 kann die Erregerspule 52 bestromt werden. Die Kontaktstifte 56 sitzen hierfür in einem Steckergehäuse 58, welches als Spritzteil aus Kunststoff ausgebildet ist.

Wie aus der Figur ersichtlich, sitzt der elektromagnetische Aktor 10 auf einem Flansch 40, der mit Befestigungsöffnungen 41 versehen ist zum Festlegen des elektromagnetischen Aktors 10 beispielsweise an einem Motorgehäuse eines Kraftfahrzeuges. Der Befestigungsflansch 40 verfügt über eine in dem elektromagnetischen Aktor 10 ragende, umlaufende Wandung 40a. An diese umlaufende Wandung 40a ist in der Figur ein sich nach oben erstreckender Gehäusering 38 feststehend angeformt, beispielsweise angeschweißt. Dieser Gehäusering 38 ragt zwischen den Spulenträger 54 und die Außenwandung des Polkerns 28.

Bei der Montage des elektromagnetischen Aktors 10 wird die vormontierte Baueinheit bestehend aus Ankerstößel 22, Führungsbuchse 26, Anker 24, Federteller 32, Federeinrichtung 34 und Federdeckel 36 zwischen den Gehäusering 38 eingepresst. Im nächsten Schritt wird der Gehäusedeckel 43 aufgesetzt und mit dem Klemmring 44 verklemmt. In einem nachfolgenden Schritt kann der Spulenträger 54 samt Erregerspule 52 um den Gehäusering 38 aufgeschoben werden. Zweckmäßigerweise ist an den Spulenträger 54 dann bereits das Steckergehäuse 58 angeformt.

Insgesamt ergibt sich durch diese Anordnung eine sehr einfache Montagemöglichkeit des gesamten elektromagnetischen Aktors 10. Auf O-Ringe und aufwändige Nacharbeiten bei der Montage des Aktors 10 kann verzichtet werden. Zudem ist der Aktor 10 kompakt aufgebaut.

Wie in der Figur weiter ersichtlich, verfügt sowohl der Anker 24 als auch die Führungsbuchse 26 über Ausgleichsbohrungen 24a und 27. Diese Ausgleichsbohrungen 24a und 27 stehen miteinander in Verbindung, beispielsweise über Öffnungen des nach innen vorspringenden Flansches 28a des Polkerns 28.

Wie bereits erläutert, zeigt die einzige Figur den elektromagnetischen Aktor 10 im bestromten Zustand, das heißt bei Bestromung der Erregerspule 52. In diesem Fall ist der Ankerstößel 22 aufgrund der Bestromung der Erregerspule 52 maximal nach oben ausgelenkt. Der zwischen dem Federteller 32 und der Führungsbuchse 26 befindliche Spalt 47 ist in dieser Stellung maximal. Der zwischen dem hervorspringenden Flansch 28a und dem Anker 24 befindliche Spalt 46 ist dagegen minimal.

Wie darüber hinaus noch anzumerken ist, ist die Führungsbuchse 26 derart gestaltet, dass diese durch den Polkern 28 mit seinem nach innen vorspringenden Flansch 28a in Richtung Kanal 100 hervorragt und bis an den verbreiterten Bereich 22a des Ankerstößels 22 heranreicht. Die Führungsbuchse 26 stößt, wie dargestellt, mit einer umlaufenden Wandung an den umlaufenden Flansch 28a des Polkerns 28 an und mit ihrer gegenüberliegenden, oberen Wandung an die umlaufende Wandung des Federdeckels 36. Die Führungsbuchse 26 ist dabei zwischen den umlaufenden Flansch 28a und den Federdeckel 36 fest eingeklemmt und damit sicher gehalten, ohne dass irgendwelche Schweißverbindungen hierfür notwendig sind.

### Bezugszeichenliste

- 10: Elektromagnetischer Aktor

- 20: Betätigungssystem
- 22: Ankerstößel
- 22a: Verbreiterter Bereich
- 22b: Einkerbung
- 24: Anker
- 24a: Bohrungen
- 26: Führungsbuchse
- 27: Bohrung
- 28: Polkern
- 28a: Ringförmiger Polkernflansch

- 32: Federteller
- 34: Federeinrichtung
- 36: Federdeckel
- 38: Gehäusering

- 40: Befestigungsflansch
- 40a: Umlaufende Wandung
- 41: Befestigungsöffnung
- 42: Gehäusedeckel
- 43: Topfförmiges Gehäuse
- 44: Klemmring
- 46: Erster Spalt
- 47: Zweiter Spalt

- 50: Erregersystem
- 52: Erregerspule
- 54: Spulenträger
- 56: Kontaktstift
- 58: Steckergehäuse

- 100: Kanal
- 102: Zulauf
- 104: Ablauf
- 106: Ablauf

- 110: Ventilelement

- X: Mittenachse

## Patentansprüche

1. Elektromagnetischer Aktor (10) für eine Ventileinrichtung, insbesondere in einem Common-Rail-System eines Kraftfahrzeuges, mit einem bei Bestromung einer Erregerspule (52) eines Erregersystems (50) axial entlang einer Mittenachse (X) des Aktors (10) bewegbaren Ankerstößel (22) zum Betätigen eines in einem Kanal (100) befindlichen Ventilelements (110), sowie mit einem Polkern (28),wobei der Polkern (28) rohrförmig ausgebildet ist und im Bereich seines dem Kanal (100) zugewandten Endes einen zur Mittenachse (X) nach innen gerichteten, umlaufenden Flansch (28a) aufweist, wobei der Ankerstößel (22) in einer Führungsbuchse (26) geführt ist, und dass diese Führungsbuchse (26) zwischen dem nach innen umlaufenden Flansch (28a) des Polkerns (28) und einem Gehäuseteil des Aktors (10) eingeklemmt gehalten ist, **dadurch gekennzeichnet, dass** das Gehäuseteil ein U-förmiger Federdeckel (36) ist, in dessen Inneren eine Federeinrichtung (34) angeordnet ist und sich diese einerseits im Inneren des Federdeckels (36) und andererseits an einem am Ankerstößel (22) festgelegten Federteller (32) abstützt.

2. Elektromagnetischer Aktor (10) nach Anspruch 1,
**dadurch gekennzeichnet, dass** der Federdeckel (36) aus einem nichtmagnetischen Material, insbesondere Edelstahl, gebildet ist.

3. Elektromagnetischer Aktor (10) nach einem der Ansprüche 1 bis 2,
**dadurch gekennzeichnet, dass** der Polkern (28) und die Führungsbuchse (26) miteinander verpresst sind.

4. Elektromagnetischer Aktor (10) nach einem der Ansprüche 1 bis 3,
**dadurch gekennzeichnet, dass** ein rohrförmiger Anker (24) vorgesehen ist, in welchen der Ankerstößel (22) mit einem dem Kanal (100) zugewandten vorderen Teil, insbesondere einem Ankerkolben (22a), eingepresst gehalten ist.

5. Elektromagnetischer Aktor (10) nach Anspruch 1,
**dadurch gekennzeichnet, dass** der Federteller (32) mit dem Ankerstößel (22) feststehend verbunden, insbesondere verschweißt, ist.

6. Elektromagnetischer Aktor (10) nach Anspruch 1,
**dadurch gekennzeichnet, dass** der Federdeckel (36) mit dem Polkern (28) verpresst ist.

7. Elektromagnetischer Aktor (10) nach einem der Ansprüche 1 bis 6,
**dadurch gekennzeichnet, dass** der Polkern (28) zusammen mit dem Federdeckel (36), der Federeinrichtung (34), dem Federteller (32), dem Ankerstößel (22), dem Anker (24) sowie der Führungsbuchse (26) eine vormontierte Baueinheit bildet, welche mit einem Befestigungsflansch (40) feststehend verbunden ist.

8. Elektromagnetischer Aktor (10) nach Anspruch 7,
**dadurch gekennzeichnet, dass** der Befestigungsflansch (40) mit einem Gehäusering (38) versehen ist, in den die Baueinheit mittels Presssitz eingesetzt ist.

9. Elektromagnetischer Aktor (10) nach einem der Ansprüche 1 bis 8,
**dadurch gekennzeichnet, dass** koaxial zur Mittenachse (X) eine Erregerspule (52) angeordnet ist, diese Erregerspule (52) auf einem Spulenträger (54) sitzt und dass ein Steckergehäuse (58) als Umspritzteil an den Spulenträger (54) angeformt ist.

10. Elektromagnetischer Aktor nach einem der Ansprüche 1 bis 9,
**dadurch gekennzeichnet, dass** die Führungsbuchse (26) in den Flansch (28a) des Polkerns (28) hinein- oder durchragt.

## Claims

1. Electromagnetic actuator (10) for a valve device, particularly in a common rail system of a motor vehicle, having an armature tappet (22) which is movable along a central axis (X) of the actuator (10) when an excitation coil (52) of an excitation system (50) is energised, for actuating a valve element (110) situated in a channel (100), and having a pole core (28), wherein the pole core (28) is formed tubular and, in the region of its end facing the channel (100), comprises a circumferential flange (28a) directed inwardly toward the central axis (X), wherein the armature tappet (22) is guided in a guide bushing (26), and that said guide bushing (26) is held clamped between the inwardly circumferentially extending flange (28a) of the pole core (28) and a housing part of the actuator (10), **characterised in that**
the housing part is a U-shaped spring cover (36), in the interior of which a spring device (34) is arranged and is supported on one side in the interior of the spring cover (36) and, on the other side, on a spring collar (32) fastened to the armature tappet (22).

2. Electromagnetic actuator (10) according to claim 1,
**characterised in that** the spring cover (36) is formed from a non-magnetic material, in particular high grade steel.

3. Electromagnetic actuator (10) according to one of claims 1 to 2,
**characterised in that** the pole core (28) and the guide bushing (26) are pressed onto one another.

4. Electromagnetic actuator (10) according to one of claims 1 to 3,
**characterised in that** a tubular armature (24) is provided into which the armature tappet (22) is held pressed with a front part, in particular an armature piston (22a), facing toward the channel (100) .

5. Electromagnetic actuator (10) according to claim 1,
**characterised in that** the spring collar (32) is firmly connected, in particular welded, to the armature tappet (22).

6. Electromagnetic actuator (10) according to claim 1,
**characterised in that** the spring cover (36) is pressed into the pole core (28).

7. Electromagnetic actuator (10) according to one of claims 1 to 6,
**characterised in that** the pole core (28) together with the spring cover (36), the spring device (34), the spring collar (32), the armature tappet (22), the armature (24) and the guide bushing (26) forms a preassembled structural unit, which is connected to a fastening flange (40).

8. Electromagnetic actuator (10) according to claim 7,
**characterised in that** the fastening flange (40) is equipped with a housing (38), into which the structural unit is set by means of a press fit.

9. Electromagnetic actuator (10) according to one of claims 1 to 8,
**characterised in that** an excitation coil (52) is arranged coaxially with the central axis (X), said excitation coil (52) being positioned on a coil carrier (54) and **in that** a plug housing (58) is formed as an injection moulded part onto the coil carrier (54).

10. Electromagnetic actuator according to one of claims 1 to 9,
**characterised in that** the guide bushing (26) extends into or through the flange (28a) of the pole core (28).

## Revendications

1. Actionneur électromagnétique (10) pour une installation de soupape notamment d'un système de rampe commune de véhicule automobile comportant un poussoir d'induit (22) déplacé par une bobine d'excitation (52) alimentée d'un système d'excitation (50), axialement le long de l'axe central (X) de l'actionneur (10) pour activer un élément de soupape (110) dans un canal (100) ainsi qu'un noyau polaire (28),
le noyau polaire (28) étant de forme tubulaire avec, dans la zone de son extrémité tournée vers le canal (100), une bride périphérique (28a) orientée vers l'intérieur, vers l'axe central (X),
le poussoir d'induit (22) étant guidé dans un manchon de guidage (26) et ce manchon de guidage (26) est serré entre le la bride (28a) périphérique intérieure du noyau polaire (28) et une partie du boîtier d'actionneur (10), pour être tenue,
**caractérisé en ce que**
la partie de boîtier est un chapeau de ressort (36) en forme de U dont l'intérieur loge une installation de ressort (34) s'appuyant d'un côté contre l'intérieur du chapeau de ressort (36) et de l'autre côté, contre une coupelle de ressort (32) fixée au poussoir d'induit (22).

2. Actionneur électromagnétique (10) selon la revendication 1,
**caractérisé en ce que**
le chapeau de ressort (36) est en une matière magnétique, en particulier en acier spécial.

3. Actionneur électromagnétique (10) selon l'une des revendications 1, 2,
**caractérisé en ce que**
le noyau polaire (28) et le manchon de guidage (26) sont pressés l'un contre l'autre.

4. Actionneur électromagnétique (10) selon l'une des revendications 1, 3,
**caractérisé en ce qu'**il comporte
un induit tubulaire (24) dans lequel est tenu pressé le poussoir d'induit (22) avec la partie avant tournée vers le canal (100) notamment un piston d'induit (22a).

5. Actionneur électromagnétique (10) selon la revendication 1,
**caractérisé en ce que**
la coupelle de ressort (32) est reliée solidairement au poussoir d'induit (22) notamment par une soudure.

6. Actionneur électromagnétique (10) selon la revendication 1,
**caractérisé en ce que**
le chapeau de ressort (36) est pressé contre le noyau polaire (28).

7. Actionneur électromagnétique (10) selon l'une des revendications 1, 6,
**caractérisé en ce que**
le noyau polaire (28) avec le chapeau de ressort (36), l'installation de ressort (34), la coupelle de ressort (32), le poussoir d'induit (22), l'induit (24) et le manchon de guidage (26) constituent une unité préassemblée, reliée solidairement à une bride de fixation (40).

8. Actionneur électromagnétique (10) selon la revendication 7,
**caractérisé en ce que**
la bride de fixation (40) est munie d'une couronne de boîtier (38) dans laquelle l'unité est tenue par un siège pressé.

9. Actionneur électromagnétique (10) selon l'une des revendications 1, 8,
**caractérisé par**
une bobine d'excitation (52) coaxiale à l'axe central (X), cette bobine d'excitation (52) étant sur un support de bobine (54) sur lequel un boîtier de connexion (58) est réalisé comme pièce surmoulée.

10. Actionneur électromagnétique (10) selon l'une des revendications 1, 9,
**caractérisé en ce que**
le manchon de guidage (26) pénètre ou traverse la bride (28a) du noyau polaire (28).
